# EUROPÄISCHE PATENTANMELDUNG

(11) **EP 1 813 842 A1**
(43) Veröffentlichungstag der Anmeldung: **01.08.2007**
(21) Anmeldenummer: 06001693.8
(22) Anmeldetag: 27.01.2006
(51) Int. Cl.: F16K 1/226

(54) **Dichtmanschette, insbesondere für Klappenventile**

(71) Anmelder: Carl Freudenberg KG, 69469 Weinheim (DE)
(72) Erfinder: Clemens, Markus, 64385 Reichelsheim (DE); Weimer, Dieter, 63322 Rödermark (DE)

(57) **Zusammenfassung**

Es wird eine Dichtmanschette (7), insbesondere für Klappenventile (1) zur Steuerung des Durchgangs von Fluiden durch Rohrleitungssysteme, aus einem gummielastischen Material, beschrieben, welche einen im Wesentlichen hohlzylinderförmigen Körper sowie zwei einander diametral gegenüberliegende Querachsbohrungen (9, 10) zur Lagerung der Antriebs- (6) und der hinteren Welle in einem im Wesentlichen mittleren ringförmigen Bereich (8) des hohlzylinderförmigen Körpers aufweist. Um die Reibung und den Verschleiß im Bereich der Querachsbohrungen 9, 10 der Dichtmanschette 7 erheblich zu reduzieren und damit die Standzeit des Ventils 1 zu erhöhen, sind die Querachsbohrungen (9,10) gemäß der Erfindung zumindest am Innenumfang der Dichtmanschette (7) im Wesentlichen elliptisch geformt, wobei die längere Halbachse (11) der Ellipse senkrecht zur Umfangsrichtung der Dichtmanschette (7) ausgerichtet ist.

## Beschreibung

### Technisches Gebiet

Die Erfindung betrifft eine Dichtmanschette, insbesondere für Klappenventile zur Steuerung des Durchgangs von Fluiden durch Rohrleitungssysteme, aus einem gummielastischen Material, welche einen im Wesentlichen hohlzylinderförmigen Körper sowie zwei einander diametral gegenüberliegende Querbohrungen in einem im Wesentlichen mittleren ringförmigen Bereich des hohlzylinderförmigen Körpers zur Lagerung der Antriebs- und der hinteren Welle aufweist.

### Stand der Technik

Klappenventile sind an sich bekannt. Sie werden zur Steuerung des Durchgangs von Fluiden durch Rohdeitungssysteme, insbesondere in der Getränke- und Lebensmittelindustrie eingesetzt. Klappenventile zeichnen sich in der Regel durch ein im wesentlichen ringförmiges Gehäuse mit einer Fluiddurchgangsöffnung auf, in welcher eine Ventilklappe mit im wesentlichen rundem Rand drehbar um eine Querachse montiert ist, um die Fluiddurchgangsöffnung wahlweise selektiv oder vollständig zu verschließen.

Die Ventilklappe wird durch eine Antriebswelle angetrieben, die durch eine Querbohrung des Gehäuses hindurchgeht, und wird durch eine hintere Welle gehalten, die in einer hinteren Bohrung koaxial zu der Querbohrung und diametral gegenüberliegend in dem Gehäuse angeordnet ist. Um die Dichtheit zu sichern, ist das Klappenventil üblicherweise mit einer Dichtung aus einem gummielastischen Material in der Fluiddurchgangsöffnung zwischen der Gehäuseinnenwandung und der Ventilklappe ausgestattet. In Schließstellung legt sich die Ventilklappe mit ihrem Außenumfang dichtend an die innere Umfangsfläche der Dichtmanschette an. Die äußere Umfangsfläche der im wesentlichen hohlzylinderförmigen Dichtmanschette liegt an der Innenumfangsfläche des Ventilgehäuses an. In einem mittleren ringförmigen Bereich ist die Manschette von zwei diametral einander gegenüberliegenden Querbohrungen durchsetzt, welche von der Antriebswelle und der hinteren Welle durchquert werden. Klappenventile dieser Art sind aus vielen Dokumenten bekannt, beispielsweise aus den Dokumenten EP-A-292,659 und US-A-3,778,028.

Nachteilig an den bekannten Dichtmanschetten ist, dass es im Betrieb im Bereich der Querdurchgänge häufig zu einem verstärktem Verschleiß der Dichtmanschette kommt. Hierdurch wird die Standzeit des Klappenventils verringert,

### Darstellung der Erfindung

Aufgabe der Erfindung ist, eine Dichtmanschette der oben beschriebenen Art so weiterzuentwickeln, dass Reibung und Verschleiß im Bereich der Querdurchgänge vermindert und damit die Standzeit des Klappenventils erhöht wird.

Diese Aufgabe wird mit einer Dichtmanschette mit allen Merkmalen des Patentanspruchs 1 gelöst. Auf vorteilhafte Ausgestaltungen nehmen die Unteransprüche Bezug.

Erfindungsgemäß sind bei einer Dichtmanschette, die insbesondere für Klappenventile zur Steuerung des Durchgangs von Fluiden durch Rohrleitungssysteme geeignet ist und aus einem gummielastischen Material besteht sowie einen im Wesentlichen hohlzylinderförmigen Körper mit zwei einander diametral gegenüberliegende Querachsbohrungen in einem im Wesentlichen mittleren ringförmigen Bereich des hohlzylinderförmigen Körpers zur Lagerung der Antriebs- und der hinteren Welle aufweist, die Querachsbohrungen zumindest am Innenumfang der Dichtmanschette im Wesentlichen elliptisch geformt in der Weise, dass die längere Halbachse der Ellipse senkrecht zur Umfangsrichtung der Dichtmanschette ausgerichtet ist.

Es hat sich in überraschender Weise gezeigt, dass sich durch diese einfache Maßnahme die Reibung und der Verschleiß im Bereich der Querdurchgänge der Dichtmanschette erheblich reduzieren und damit die Standzeit des Ventils erhöhen lassen. Erste Tests ergaben sogar eine Verdoppelung der Standzeit, wobei das exakte Ausmaß der Erhöhung u. a. vom verwendeten Material für die Dichtmanschette (übliche Dichtmanschettenmaterialien sind z.B. EPDM, FPM, VMGL, HNBR, FFPM) abhängig ist. Offensichtlich führt die erfindungsgemäße Maßnahme zu einer Vergleichmäßigung des Anpressdrucks über den Umfang der Querachslagerung.

### Kurzbeschreibung der Zeichnung

Nachfolgend wird die Erfindung anhand der Figuren näher erläutert.

Diese zeigen, jeweils schematisch in:
- Fig.1: einer räumlichen Teilschnittdarstellung eine erfindungsgemäße Dichtmanschette in der Einbausituation;
- Fig. 2: einer Schnittdarstellung eine Detailansicht einer erfindungsgemäßen Dichtmanschette mit elliptisch ausgebildeter Querachsbohrung

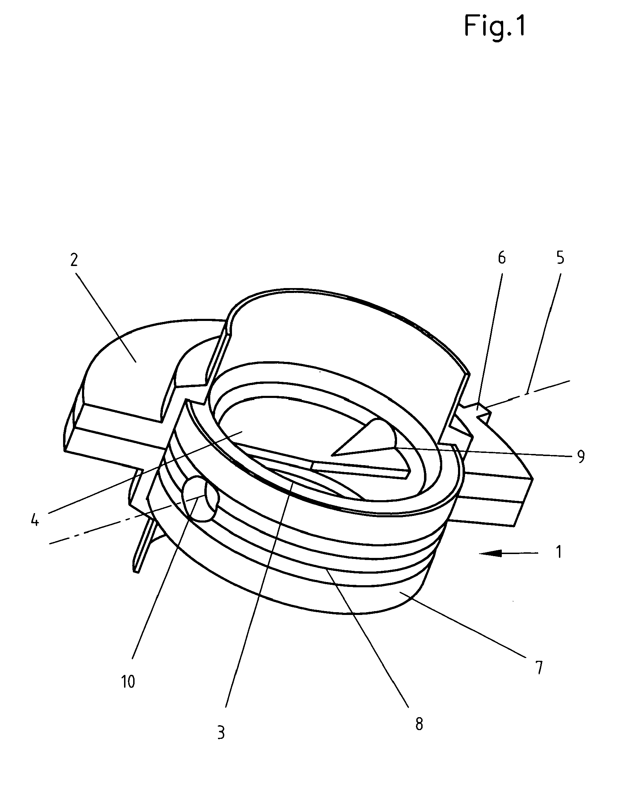

Man erkennt in Fig. 1 ein Klappenventil 1, welches ein ringförmiges Gehäuse 2 mit einer Fluiddurchgangsöffnung 3 aufweist. In der Fluiddurchgangsöffnung 3 ist eine Ventilklappe 4 montiert. Die Ventilklappe 4 ist um eine Querachse 5 drehbar gelagert, um die Fluiddurchgangsöffnung 3 wahlweise selektiv oder vollständig zu verschließen. Die Ventilklappe 4 wird durch eine Antriebswelle 6 angetrieben, die durch eine Querbohrung des Gehäuses 2 hindurchgeht, und wird durch eine in der Figur nicht dargestellten hinteren Welle gehalten, die in einer hinteren Bohrung koaxial zu der Querbohrung und diametral gegenüberliegend in dem Gehäuse 2 angeordnet ist. Um die Dichtheit zu sichern, ist das Klappenventil 1 üblicherweise mit einer Dichtmanschette 7 aus einem gummielastischen Material in der Fluiddurchgangsöffnung 3 zwischen der Innenwandung des Gehäuses 2 und der Ventilklappe 4 ausgestattet. In Schließstellung legt sich die Ventilklappe 4 mit ihrem Außenumfang dichtend an die innere Umfangsfläche der Dichtmanschette 7 an.

Die äußere Umfangsfläche der im wesentlichen hohlzylinderförmigen Dichtmanschette 7 liegt an der Innenumfangsfläche des Ventilgehäuses 2 an. In einem mittleren ringförmigen Bereich 8 ist die Manschette 7 von zwei diametral einander gegenüberliegenden Querbohrungen 9, 10 durchsetzt, welche von der Antriebswelle 6 und der hinteren Welle durchquert werden. Erfindungsgemäß sind die Querachsbohrungen 9, 10 zumindest am Innenumfang der Dichtmanschette 7 im Wesentlichen elliptisch geformt, wobei die längere Halbachse 11 der Ellipse senkrecht zur Umfangsrichtung der Dichtmanschette 7 ausgerichtet ist. Die elliptische Ausführung der Achsbohrung führt zu einer annähernd symmetrischen Druck- und Spannungsverteilung über die Umfangsrichtung der Klappenachse im Einbaufall.

Es hat sich in überraschender Weise gezeigt, dass sich durch diese einfache Maßnahme die Reibung und der Verschleiß im Bereich der Querachsbohrungen 9, 10 der Dichtmanschette 7 erheblich reduzieren und damit die Standzeit des Ventils 1 erhöhen lassen,

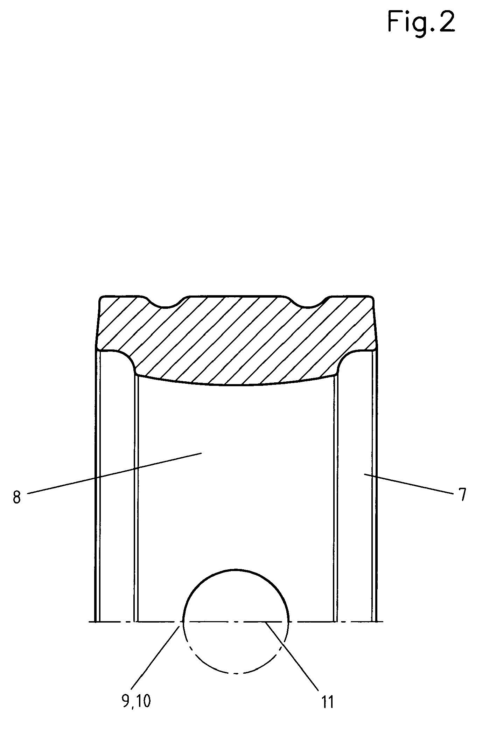

In Fig. 2 ist in einer Detailansicht die elliptische Ausbildung einer der beiden Querachsbohrungen dargestellt. Man erkennt, dass die längere Halbachse 11 der Ellipse senkrecht zur Umfangsrichtung der Dichtmanschette 7 ausgerichtet ist.

## Patentansprüche

1. Dichtmanschette (7), insbesondere für Klappenventile (1) zur Steuerung des Durchgangs von Fluiden durch Rohrleitungssysteme, aus einem gummielastischen Material, welche einen im Wesentlichen hohlzylinderförmigen Körper sowie zwei einander diametral gegenüberliegende Querachsbohrungen (9, 10) zur Lagerung der Antriebs-(6) und der hinteren Welle in einem im Wesentlichen mittleren ringförmigen Bereich (8) des hohlzylinderförmigen Körpers aufweist, **dadurch gekennzeichnet, dass** die Querachsbohrungen (9,10) zumindest am Innenumfang der Dichtmanschette (7) im Wesentlichen elliptisch geformt sind, wobei die längere Halbachse (11) der Ellipse senkrecht zur Umfangsrichtung der Dichtmanschette (7) ausgerichtet ist.
